# EUROPÄISCHE PATENTSCHRIFT

(11) **EP 1 112 166 B1**
(45) Veröffentlichungstag und Bekanntmachung des Hinweises auf die Patenterteilung: **11.12.2002**
(21) Anmeldenummer: 99955684.8
(22) Anmeldetag: 09.09.1999
(51) Int. Cl.: B29C 49/78, B29C 49/64

(54) **VERFAHREN UND VORRICHTUNG ZUR STEUERUNG EINER BEHÄLTERFORMUNG**
PROCESS AND DEVICE FOR CONTROLLING THE MOLDING OF A CONTAINER
PROCEDE ET DISPOSITIF POUR ASSURER LA COMMANDE DU MOULAGE DE RECIPIENTS

(30) Priorität: 19.09.1998 DE 19843053
(43) Veröffentlichungstag der Anmeldung: 04.07.2001
(73) Patentinhaber: SIG Corpoplast GmbH & Co. KG, 22145 Hamburg (DE)
(72) Erfinder: ROSE, Peter, D-22159 Hamburg (DE); PREDÖHL, Willi, D-23869 Elmenhorst-Fischbek (DE)
(74) Vertreter: Klickow, Hans-Henning
(86) Internationale Anmeldenummer: DE9902904
(87) Internationale Veröffentlichungsnummer: WO00016964

(56) Entgegenhaltungen:
- EP-A- 0 387 737
- EP-A- 0 703 057
- WO-A-99/01267
- FR-A- 2 759 939
- US-A- 5 470 218
- US-A- 5 718 853
- PATENT ABSTRACTS OF JAPAN vol. 018, no. 650 (M-1719), 9. Dezember 1994 (1994-12-09) & JP 06 254955 A (NISSEI ASB MACH CO LTD), 13. September 1994 (1994-09-13)
- PATENT ABSTRACTS OF JAPAN vol. 018, no. 094 (M-1561), 16. Februar 1994 (1994-02-16) & JP 05 301275 A (NISSEI ASB MACH CO LTD), 16. November 1993 (1993-11-16)

## Beschreibung

Die Erfindung betrifft ein Verfahren zur Steuerung einer Behälterformung bei der Herstellung von Behältern aus einem thermoplastischen Material, bei dem eine einstufige Herstellung der Behälter derart durchgeführt wird, daß mindestens zwei im Bereich eines Spritzgußmoduls spritzgegossene Vorformlinge auf einem Temperaturniveau oberhalb einer Umgebungstemperatur vom Spritzgußmodul zeitlich nacheinander mindestens einer Blasstation zur Blasverformung der Vorformlinge in Behälter zugeführt und vor der Blasverformung geeignet temperiert werden.

Die Erfindung betrifft darüber hinaus eine Vorrichtung zur Blasformung von Behältern aus einem thermoplastischen Material, die ein Spritzgußmodul zur Herstellung von Vorformlingen, eine Temperiereinrichtung für die spritzgegossenen Vorformlinge, mindestens eine Reckeinrichtung für die Vorformlinge sowie mindestens eine Blastation zur Umformung der Vorformlinge in die Behälter aufweist.

Derartige Verfahren und Vorrichtungen werden dazu verwendet, Vorformlinge aus einem thermoplastischen Material, beispielsweise Vorformlinge aus PET (Polyethylenterephthalat), innerhalb einer Blasmaschine unterschiedlichen Bearbeitungsstationen zuzuführen. Typischerweise weist eine derartige Blasmaschine eine Heizeinrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des Vorformlings wird in. der DE-OS 43 40 291 erläutert. Die Vorrichtung kann ebenfalls dazu verwendet werden, fertig geblasene Behälter aus der Blaseinrichtung zu entnehmen und weiterzubefördern.

Der grundsätzliche Aufbau einer Blasstation zur Behälterformung wird in der DE-OS 42 12 583 beschrieben. Möglichkeiten zur Temperierung der Vorformlinge werden in DE-OS 23 52 926 erläutert.

Innerhalb der Vorrichtung zur Blasformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die Vorformlinge aufgesteckt werden.

Die Vorformlinge können aber auch mit anderen Trageinrichtungen gehandhabt werden. Die Verwendung von Greifzangen zur Handhabung von Vorformlingen wird beispielsweise in der FR-OS 27 20 679 beschrieben. Ein Spreizdorn, der zur Halterung in einen Mündungsbereich des Vorformlings einführbar ist, wird in der WO 95 33 616 erläutert.

Die bereits erläuterte Handhabung der Vorformlinge erfolgt zum einen bei den sogenannten Zweistufenverfahren, bei denen die Vorformlinge zunächst in einem Spritzgußverfahren hergestellt, anschließend zwischengelagert und erst später hinsichtlich ihrer Temperatur konditioniert und zu einem Behälter aufgeblasen werden. zum anderen erfolgt eine Anwendung bei den sogenannten Einstufenverfahren, bei denen die Vorformlinge unmittelbar nach ihrer spritzgußtechnischen Herstellung und einer ausreichenden Verfestigung geeignet temperiert. und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig anzutreffen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Generell wird bei der blastechnischen Herstellung von Behältern angestrebt, sämtliche produzierten Behälter relativ zueinander mit einer hohen Gleichmäßigkeit von Materialverteilung, Orientierungsverlauf sowie Kristallisationsgrad zu produzieren. Bei Blasmaschinen, bei denen innerhalb einer Blasstation gleichzeitig mehrere Vorformlinge aufgeblasen werden, tritt das Problem auf, daß hinsichtlich der Temperaturverteilung in den Vorformlingen Unterschiede vorliegen können, da die Vorformlinge zwar zeitgleich in der Blasstation verarbeitet, nicht jedoch zuvor zeitgleich hinsichtlich ihrer Temperatur zur Kompensation der thermischen Unterschiede beeinflußt wurden.

Ein vergleichbares Problem tritt ebenfalls auf, wenn bei der Durchführung des Einstufenverfahrens zunächst eine bestimmte Anzahl von Vorformlingen gleichzeitig spritzgußtechnisch hergestellt und diese Vorformlinge anschließend mit einem Temperaturprofil versehen werden, bei der blastechnischen Behälterformung dann jedoch sequentiell Teilmengen dieser Vorformlinge verarbeitet werden. Aufgrund des zeitlichen Abstandes zwischen der Verarbeitung der Teilmengen können Unterschiede im Wärmeinhalt der Vorformlinge auftreten.

Aus der US-A-5 718 853 ist es bekannt, Vorformlinge bei der Durchführung des zweistufigen Blasverfahrens zunächst innerhalb eines Heiztunnels thermisch vorzukonditionieren, um eine gleichmäßige Wärmeverteilung innerhalb der einzelnen Vorformlinge zu erreichen und anschließend die Vorformlinge mit einem Temperaturprofil zu versehen, um eine geeignete Materialverteilung bei der Blasverformung zu erreichen. Alle Vorformlinge werden in gleichartiger Art und Weise thermisch konditioniert.

Aus der EP-A-0 703 057 ist es bekannt, große Behälter durch Blasverformung aus Vorformlingen herzustellen. Der spritzgegossene Vorformling wird hierzu von der Spritzgußeinrichtung zur Blaseinrichtung überführt und hier wiederholt und mit zeitlichen Unterbrechungen mit Blasluft eines geringeren Druckes beaufschlagt, um einen temporären Behälter herzustellen. Der temporäre Behälter wird anschließend in die endgültige Blasform überführt und hier mit unter Hochdruck stehender Blasluft beaufschlagt.

In der EP-A-0 387 737 wird ein weiteres Verfahren zur Durchführung eines zweistufigen Blasvorganges beschrieben. Die Vorformlinge werden hier einander folgenden Beheizungs- und Abkühlungszyklen unterworfen, um eine geeignete Temperierung der Vorformlinge durch ihre Wandungsdicke hindurch zu erreichen. Bei der Durchführung des erläuterten Verfahrens wird berücksichtigt, daß die Vorformlinge üblicherweise von außen mit Infrarot-Strahlung beheizt werden und daß diese Infrarot-Strahlung überwiegend bereits in der Nähe der Außenwand des Vorformlings in Wärme umgesetzt wird. Aufgrund der relativ schlechten Wärmeleiteigenschaften des thermoplastischen Materials ist eine Zeitspanne für einen Temperaturausgleich erforderlich, die durch die erläuterten Beheizungs- und Abkühlungszyklen beeinflußt werden kann.

Aus der FR-A-2 759 939 ist es bekannt, eine Blaseinrichtung mit mehreren Blasstationen zu konstruieren und innerhalb dieser Blasstationen unterschiedliche Blasparameter zu realisieren. Insbesondere ist daran gedacht, im Hinblick auf die jeweiligen Druckverläufe eine Phasenverschiebung zwischen den einzelnen Blasstationen zu realisieren.

In der US-A-5 470 218 wird eine graphische Bedienoberfläche für eine Vorrichtung zur Durchführung des einstufigen Blasverfahrens beschrieben. Mit Hilfe der graphischen Bedienoberfläche ist es möglich, Prozeßparameter für die Durchführung des Spritzgußvorganges sowie des Blasvorganges einzugeben.

Aus den PATENT ABSTRACTS OF JAPAN vol. 018, no. 650(M-1719), 9. Dezember 1994 (1994-12-09) & JP 06 254955 A ist es bekannt, Vorformlinge zur Unterstützung einer geeigneten Materialverteilung im Bereich des geblasenen Behälters mit einem Temperaturprofil in Richtung ihrer Längsachse zu versehen. zur Unterstützung einer gleichmäßigen Behälterqualität sind alle Vorformlinge in gleicher Art und Weise mit einem Temperaturprofil versehen.

Aus den PATENT ABSTRACTS OF JAPAN vol. 018, no. 094 (M-1561), 16. Februar 1994 (1994-02-16) & JP 05 301275 A ist eine weitere Möglichkeit zur Realisierung des Einstufen-Verfahrens bekannt. Bei der einstufigen Herstellung von Behältern werden hier zwei Spritzgußmodule eingesetzt und relativ zueinander zeitversetzt und koordiniert zum Blasmodul betrieben.

Aufgabe der vorliegenden Erfindung ist es daher, ein Verfahren der einleitend genannten Art so zu verbessern, daß eine Herstellung von Behältern mit gleichmäßigen Materialeigenschaften unterstützt wird.

Diese Aufgabe wird erfindungsgemäß dadurch gelöst, daß daß zur Kompensation eines relativ zueinander ungleichmäßigen Wärmeinhaltes im Material der zeitlich aufeinander folgend umzuformenden Vorformlinge mindestens ein Blasparameter bei der Umformung der Vorformlinge zu den Behältern bei zeitlich aufeinander folgenden Blasverformungen relativ zueinander derart unterschiedlich vorgegeben wird, daß eine Kompensation des ungleichmäßigen Wärmeinhaltes derart erfolgt, daß nach einer Beendigung des Blasvorganges Behälter mit näherungsweise identischer räumlicher Verteilung von Wandmaterial, Orientierungsverlauf und Kristallisationscharakteristik vorliegen.

Weitere Aufgabe der vorliegenden Erfindung ist es, eine Vorrichtung der einleitend genannten Art so zu konstruieren, daß eine gleichmäßige Behälterproduktion unterstützt wird.

Diese Aufgabe wird erfindungsgemäß dadurch gelöst, daß eine Parametersteuerung vorgesehen ist, die mindestens einen den Umformungsvorgang beeinflussenden Parameter für mindestens zwei zeitlich nacheinander verarbeitete Vorformlinge voneinander abweichend vorgibt.

Zweckmäßige Weiterbildungen der Erfindung sind in den betreffenden abhängigen Ansprüchen beschrieben.

Durch die unterschiedliche Vorgabe mindestens eines Blasparameters wird berücksichtigt, daß die Materialeigenschaften des Endproduktes von einer Vielzahl von Faktoren abhängig sind, die Rückwirkungen aufeinander aufweisen. Treten somit aufgrund von nicht zu beeinflussenden Produktionsbedingungen ungleichmäßige Temperaturverteilungen bei den zu verarbeitenden Vorformlingen relativ zueinander auf, so ist es bei geeigneter Beeinflussung des Blasvorganges in der Regel möglich, aus der ungleichmäßigen Temperaturverteilung oder dem unterschiedlichen Wärmeinhalt sich ansonsten bei einem Verzicht auf zusätzliche Gegenmaßnahmen einstellende Unterschiede bei den hergestellten Behältern zu kompensieren bzw. zumindest die Unterschiede zu verringern.

Der jeweilige Einwirkungsparameter wird zweckmäßigerweise nach einer Analyse der bei den Vorformlingen ohne zusätzliche Einwirkung auftretenden Temperierungsunterschieden gewählt. Es können sowohl im Bereich der Blasstation wirkende Blasparameter als auch bereits vor einer Zuführung der Vorformlinge zur Blasstation anzutreffende Parameter verändert werden. Hierbei ist insbesondere an die Beheizung der Vorformlinge oder eine gezielte Beeinflussung des Abkühlvorganges gedacht. Je nach den vorliegenden Anforderungen können ein oder mehrere Blasparameter adoptiert werden.

Bei prozessbedingten bekannten und sich stets reproduzierenden Unterschieden bei den Eigenschaften der zu verarbeitenden Vorformlinge ist es möglich, die Vorgabe der unterschiedlichen Blasparameter über eine reine Steuerung durchzuführen. Grundsätzlich ist aber auch daran gedacht, die Vorgabe der unterschiedlichen Parameter in Abhängigkeit von einer durchgeführten Messung hinsichtlich mindestens einer Eigenschaft des Vorformlings oder adaptiv bei einer Erfassung und Verarbeitung von mindestens einer Eigenschaft des hergestellten Behälters durchzuführen.

Eine Vielfalt von Möglichkeiten zur Einwirkung auf den Blasvorgang wird dadurch bereitgestellt, daß bei der Blasverformung zeitlich nacheinander zuerst eine Vorblasphase und anschließend eine Hauptblasphase durchgeführt wird, wobei während der Hauptblasphase ein höherer Blasdruck als während der Vorblasphase erreicht wird und daß als Blasparameter der Druckverlauf verändert wird.

Eine einfache Einflußnahme wird dadurch unterstützt, daß als Blasparameter die Zeitdauer der Vorblasphase verändert wird.

Ebenfalls ist daran gedacht, daß als Blasparameter die Zeitdauer der Hauptblasphase verändert wird.

Eine andere Möglichkeit besteht darin, daß als Blasparameter der Umschaltzeitpunkt zwischen der Vorblasphase und der Hauptblasphase verändert wird.

Eine andere Einflußmöglichkeit wird dadurch definiert, daß als Blasparameter die Reckgeschwindigkeit verändert wird.

Schließlich ist es auch möglich, daß als Blasparameter der Zeitpunkt des Beginns des Reckvorganges verändert wird.

Eine Einwirkungsmöglichkeit vor einer Zuführung der Vorformlinge zur Blasstation wird dadurch bereitgestellt, daß eine unterschiedliche thermische Behandlung der aufeinander folgenden Vorformlinge derart durchgeführt wird, daß trotz des Ablaufes einer relativ zueinander unterschiedlichen Wartezeit der Vorformlinge bis zur Blasverformung beziehungsweise bis zu einem Aufheizen vor der Blasverformung eine näherungsweise gleiche Temperaturverteilung in den Vorformlingen vorliegt.

Eine andere Variante besteht darin, daß zunächst eine im wesentlichen gleiche thermische Behandlung der aufeinander folgenden Vorformlinge durchgeführt wird und daß sich an diese gleiche thermische Behandlung eine weitere thermische Behandlung anschließt, die relativ zueinander unterschiedliche Wartezeiten auf den Beginn der anschließenden Blasverformung näherungsweise kompensiert.

Ein typisches Anwendungsgebiet wird dadurch definiert, daß eine Anwendung im Bereich einer einstufigen Herstellung der Behälter durchgeführt wird.

Eine typische Anwendung bei der Durchführung des Einstufenverfahrens besteht darin, daß zunächst N Vorformlinge gleichzeitig spritzgußtechnisch hergestellt, anschließend X x M Vorformlinge gleichzeitig zu Behältern umgeformt werden, wobei X x M = N gilt.

Alternativ zu einer deterministischen Steuerung ist es auch möglich, daß eine Steuerung der Veränderung des mindestens einen Blasparameters in Abhängigkeit von einer Erfassung mindestens einer Eigenschaft der Vorformlinge durchgeführt wird.

In der Zeichnung sind Ausführungsbeispiele der Erfindung schematisch dargestellt. Es zeigen:
- Figur 1:: eine perspektivische Darstellung einer Blasstation zur Herstellung von Behältern aus Vorformlingen,
- Figur 2:: einen Längsschnitt durch eine Blasform, in der ein Vorformling gereckt und expandiert wird,
- Figur 3:: eine Skizze zur Veranschaulichung eines grundsätzlichen Aufbaus einer Vorrichtung zur Blasformung von Behältern und
- Figur 4:: einen prinzipiellen Aufbau eines Blasmoduls einer Vorrichtung zur Durchführung des Einstufenverfahrens.

Eine Anwendung des Verfahrens und der Vorrichtung kann sowohl bei der einstufigen als auch bei der zweistufigen Behälterherstellung erfolgen. Eine Beheizung bzw. Wärmekonditionierung eines Vorformlings 1 vor dem Orientierungsvorgang ist in unterschiedlichen Variationen denkbar. Bei einer Verwendung einer tunnelartigen Heizstrecke erfolgt die Temperierung lediglich in Abhängigkeit von der Verweildauer. Es ist jedoch ebenfalls denkbar, Heizstrahler zu verwenden, die den Vorformling 1 mit Infrarot- oder Hochfrequenzstrahlung beaufschlagen. Mit Hilfe derartiger Strahler ist es möglich, ein Temperaturprofil im Bereich des Vorformlings 1 in Richtung der Längsachse zu erzeugen.

Wird ein derartiger Heizstrahler aus mehreren unabhängig voneinander ansteuerbaren Heizelementen ausgebildet, die in Richtung einer Längsachse des Vorformlings 1 übereinander angeordnet sind, so kann durch eine intensivere Ansteuerung der Heizelemente im Bereich der in Richtung auf den Mündungsabschnitt oberen Ausdehnung des Vorformlings 1 im verdickten Bereich des Wandungsabschnittes eine höhere Wärmeenergie eingestrahlt werden, als in dem Bereich des Wandungsabschnittes, der dem Boden zugewandt ist. Bei lediglich gleichmäßig ansteuerbaren Heizstrahlern kann eine derartige Wärmeprofilierung auch durch eine Anordnung der Heizelemente mit in Richtung der Längsachse unterschiedlichen Abständen realisiert werden.

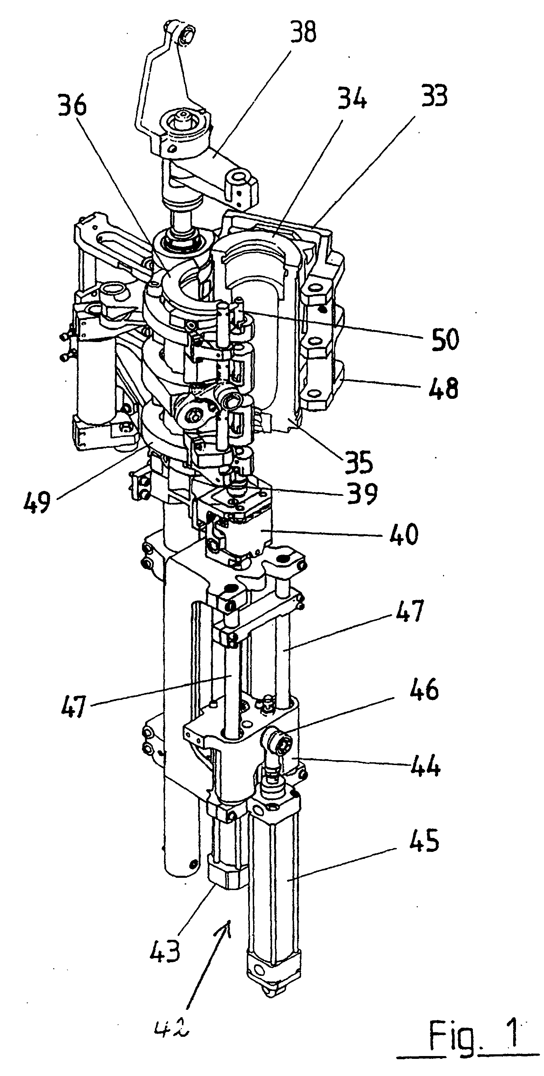

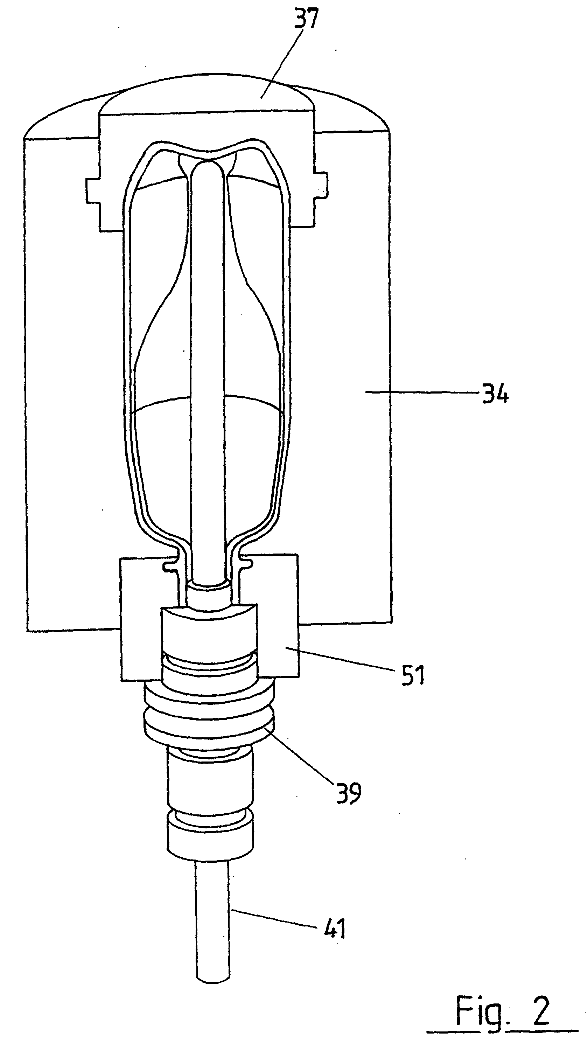

Der prinzipielle Aufbau einer Vorrichtung zur Umformung der Vorformlinge 1 in Behälter 13 ist in Fig. 1 und in Fig. 2 dargestellt.

Die Vorrichtung zur Formung des Behälters 13 besteht im wesentlichen aus einer Blasstation 33, die mit einer Blasform 34 versehen ist, in die ein Vorformling 1 einsetzbar ist. Der Vorformling 1 kann ein spritzgegossenes Teil aus Polyäthylenterephthalat sein. Zur Ermöglichung eines Einsetzens des Vorformlings 1 in die Blasform 34 und zur Ermöglichung eines Herausnehmens des fertigen Behälters besteht die Blasform 34 aus Formhälften 35,36 und einem Bodenteil 37, der von einer Hubvorrichtung 38 positionierbar ist. Der Vorformling 1 kann im Bereich der Blasstation 33 von einem Transportdorn 39 gehalten sein, der gemeinsam mit dem Vorformling 1 eine Mehrzahl von Behandlungsstationen innerhalb der Vorrichtung durchläuft. Es ist aber auch möglich, den Vorformling 1 beispielsweise über Zangen oder andere Handhabungsmittel direkt in die Blasform 34 einzusetzen.

Zur Ermöglichung einer Druckluftzuleitung ist unterhalb des Transportdornes 39 ein Anschlußkolben 40 angeordnet, der dem Vorformling 1 Druckluft zuführt und gleichzeitig eine Abdichtung relativ zum Transportdorn 39 vornimmt. Bei einer abgewandelten Konstruktion ist es grundsätzlich aber auch denkbar, feste Druckluftzuleitungen zu verwenden.

Eine Reckung des Vorformlings 1 erfolgt mit Hilfe einer Reckstange 41, die von einem Zylinder 42 positioniert wird. Grundsätzlich ist es aber auch denkbar, eine mechanische Positionierung der Reckstange 41 über Kurvensegmente durchzuführen, die von Abgriffrollen beaufschlagt sind. Die Verwendung von Kurvensegmenten ist insbesondere dann zweckmäßig, wenn eine Mehrzahl von Blasstationen 33 auf einem rotierenden Blasrad angeordnet sind. Eine Verwendung von Zylindern 42 ist zweckmäßig, wenn ortsfest angeordnete Blasstationen 33 vorgesehen sind.

Bei der in Fig. 1 dargestellten Ausführungsform ist das Recksystem derart ausgebildet, daß eine Tandem-Anordnung von zwei Zylindern 42 bereitgestellt ist. Von einem Primärzylinder 43 wird die Reckstange 41 zunächst vor Beginn des eigentlichen Reckvorganges bis in den Bereich des Bodens 7 des Vorformlings 1 gefahren. Während des eigentlichen Reckvorganges wird der Primärzylinder 43 mit ausgefahrener Reckstange gemeinsam mit einem den Primärzylinder 43 tragenden Schlitten 44 von einem Sekundärzylinder 45 oder über eine Kurvensteuerung positioniert. Insbesondere ist daran gedacht, den Sekundärzylinder 45 derart kurvengesteuert einzusetzen, daß von einer Führungsrolle 46, die während der Durchführung des Reckvorganges an einer Kurvenbahn entlang gleitet, eine aktuelle Reckposition vorgegeben wird. Die Führungsrolle 46 wird vom Sekundärzylinder 45 gegen die Führungsbahn gedrückt. Der Schlitten 44 gleitet entlang von zwei Führungselementen 47.

Nach einem Schließen der im Bereich von Trägern 48,49 angeordneten Formhälften 35,36 erfolgt eine Verriegelung der Träger 48 relativ zueinander mit Hilfe einer Verriegelungseinrichtung 50.

Zur Anpassung an unterschiedliche Formen des Mündungsabschnittes 2 ist gemäß Fig. 2 die Verwendung separater Gewindeeinsätze 51 im Bereich der Blasform 34 vorgesehen.

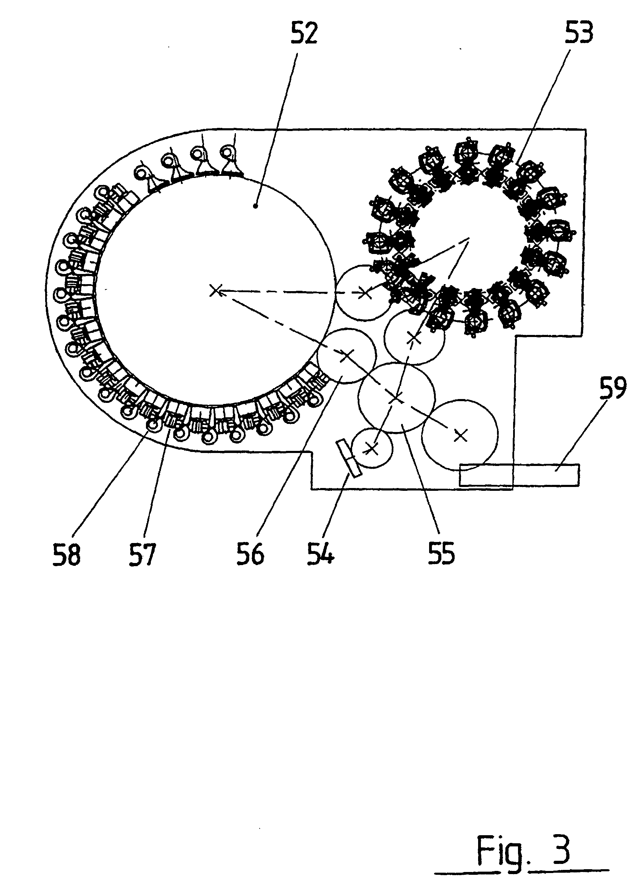

Fig. 3 zeigt den grundsätzlichen Aufbau einer Blasmaschine, die mit einem rotierenden Heizrad 52 sowie einem rotierenden Blasrad 53 versehen ist. Ausgehend von einer Vorformlingseingabe 54 werden die Vorformlinge 1 von Übergaberädern 55, 56 in den Bereich des Heizrades 52 transportiert. Entlang des Heizrades 52 sind Heizstrahler 57 sowie Gebläse 58 angeordnet, um die Vorformlinge 1 zu temperieren. Nach einer ausreichenden Temperierung der Vorformlinge 1 werden diese an das Blasrad 53 übergeben, in dessen Bereich die Blasstationen 33 angeordnet sind. Die fertig geblasenen Behälter 13 werden von weiteren Übergaberädern einer Ausgabestrecke 59 zugeführt.

Um einen Vorformling 1 derart in einen Behälter 13 umformen zu können, daß der Behälter 13 Materialeigenschaften aufweist, die eine lange Verwendungsfähigkeit von innerhalb des Behälters 13 abgefüllten Lebensmitteln, insbesondere von Getränken, gewährleisten, müssen spezielle Verfahrensschritte bei der Beheizung und Orientierung der Vorformlinge 1 eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings 1 während des Orientierungsvorganges erfolgt durch Druckluftzuführung. Die Druckluftzuführung ist in eine Vorblasphase, in der Gas, zum Beispiel Preßluft, mit einem niedrigen Druckniveau zugeführt wird und eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Eine Einwirkung auf die Blasparameter zur Vergleichmäßigung der Eigenschaften der hergestellten Behälter kann in unterschiedlicher Art erfolgen. Beispielsweise ist es möglich, den Zeitpunkt der Zuführung des Blasdruckes für die Vorblasphase zu verändern. Ebenfalls ist es möglich, den maximal einwirkenden Druck während der Vorblasphase zu adaptieren. Eine weitere Möglichkeit besteht darin, den Volumenstrom an Blasluft während der Vorblasphase zu verändern.

Eine andere Möglichkeit zur Parameterbeeinflußung besteht darin, die Zeitspanne zwischen dem Start des Reckvorganges und dem Start der Vorblasphase zu verändern. Schließlich ist ebenfalls daran gedacht, den Zeitpunkt für den Beginn der Hauptblasphase sowie den maximal während der Hauptblasphase wirkenden Druck zu adaptieren.

Vor einer Zuführung der Vorformlinge zur Blasstation ist es möglich, Einfluß auf das Temperaturprofil innerhalb der Vorformlinge sowie den jeweiligen Wärmeinhalt zu nehmen. Werden beispielsweise zunächst die Vorformlinge kontinuierlich temperiert, anschließend aber mindestens zwei Vorformlinge zeitlich gemeinsam zu Behältern umgeformt, so ist es möglich, die aufgrund der kontinuierlichen Beheizung bei gleichzeitiger weiterer Verarbeitung relativ zueinander ungleichmäßigen Wärmeinhalten durch gezielte Einwirkung auf die Vorformlinge vor Beginn eines Blasvorganges zu kompensieren. Die gezielte Einwirkung kann sowohl ein Heizvorgang, ein Kühlvorgang oder eine Kombination aus Heizen und Kühlen sein.

Auch bei der Durchführung des Einstufenverfahrens ist es möglich, zur Kompensation von ungleichmäßigen Wärmeinhalten oder Wärmeverteilungen aufgrund unterschiedlicher Wartezeiten auf den Blasvorgang oder eine Wiederbeheizung nicht nur eine Einflußnahme auf Parameter im Bereich der Blasstation vorzunehmen, sondern auch eine Einflußnahme auf Parameter im Vorfeld des Blasvorganges durchzuführen. Es wird dabei angestrebt, wenigstens die Ungleichmäßigkeiten zu vermindern. Auch in diesem Fall ist beispielsweise an eine gezielte Beeinflußung des Temperaturprofils durch Heizen oder Kühlen oder an eine Kombination von Heizen und Kühlen gedacht.

Bei einstufigen Blasmaschinen wird das KunststoffGranulat (Resin) über eine beheizte Schnecke geschmolzen und unter hohem Druck einer Spritzgießform zur Erstellung von Vorformlingen, eingespritzt. Die Spritzgießform hat z. B. 8 x Kavitäten, angeordnet in einer Reihe. Nach dem Abkühlen der Schmelze, auf etwa 130° bis 150° C, werden die Vorformlinge einer Transporteinrichtung, z.B. einer Kette mit Vorformlings-Halterungen, übergeben. Die übergebenen Vorformlinge haben eine Materialtemperatur von etwa 120° bis 130° C. Nach einer weiteren Abkühlung werden die warmen Vorformlinge (100° bis 110° C) einer Blasstation (z.B. mit 2 x Blasformen in einer Reihe), in der sie zu Kunststoffbehältern aufgeblasen, geformt und gekühlt werden, übergeben. Das Blasen und Kühlen der Kunststoffbehälter ist in der Prozesszeit erheblich kürzer im Vergleich zur Zykluszeit des Spritzgießprozesses. Der Spritzgießprozess ist gegenüber der Blasprozesszeit etwa um das 5- bis 8-fache länger.

Qualitativ hochwertige Kunststoffbehälter können insbesondere dann erstellt werden, wenn die Vorformlinge zyklisch, d.h. gruppenweise verarbeitet werden, um an jedem Vorformling die gleiche Temperaturentwicklung zu erreichen. Durch die gruppenweise und temperaturstabile Übergabe der Vorformlinge an die Blasstation wird die Produktionsleistung der einstufigen Blasmaschinen durch den Spritzgießprozess begrenzt.

Werden die Vorformlinge z. B. paarweise der Blasstation übergeben, wird die Produktionsleistung bei einer Gruppe von z. B. 8 x Vorformlingen um das 4-fache gesteigert. Hierbei hat man jedoch das Problem, daß die seriell der Blasstation übergebenen Vorformlinge ohne Kompensationsmaßnahmen unterschiedlich in der Temperaturverteilung sind. Dies bewirkt, daß sich jede der Teilgruppen, infolge der Kunststoff-Temperatur-Abweichungen, unterschiedlich im Blasvorgang entwikkelt, was zu extremen Qualitätsabweichungen führt. Dieses negative Prozessverhalten durch die unterschiedliche Temperatur der Vorformlinge ist besonders gravierend bei komplizierten Kunststoffbehältern.

Durch die bereits beschriebenen Kompensationsmaßnahmen können diese Nachteile vermindert werden.

Ebenfalls ist es möglich, um die thermischen Unterschiede der z.B. paarweise an die Blasstation übergebenen Vorformlinge zu kompensieren, den Blasprozess für jede Vorformlings-Teilgruppe gesondert im Blasprozess zu steuern und zu regeln. Dies kann erreicht werden, indem man mit einem Pyrometer die Temperatur jeder Vorformlingsuntergruppe vor der Übergabe an die Blasstation erfaßt und den Temperaturmeßwert zur Veränderung der Blasprozess-Parameter aktiviert. Außerdem können auch die erforderlichen Blasprozess-Parameter nach einer festgelegten Strategie für jede Vorformlings-Teilgruppe gestuft geändert werden.

Durch das gezielte Beeinflussen der involvierten Blasprozess-Parameter wird erreicht, daß jede Vorformlings-Teilgruppe, z.B. paarweise, zu qualitativ hochwertigen Kunststoffbehältern geblasen wird. Die aktive Steuerung der Blasprozess-Parameter kann für jede Untergruppe der Vorformlinge mit einer Computersteuerung in Verknüpfung mit der oben beschriebenen Temperaturmessung oder einer festgelegten Strategie erfolgen.

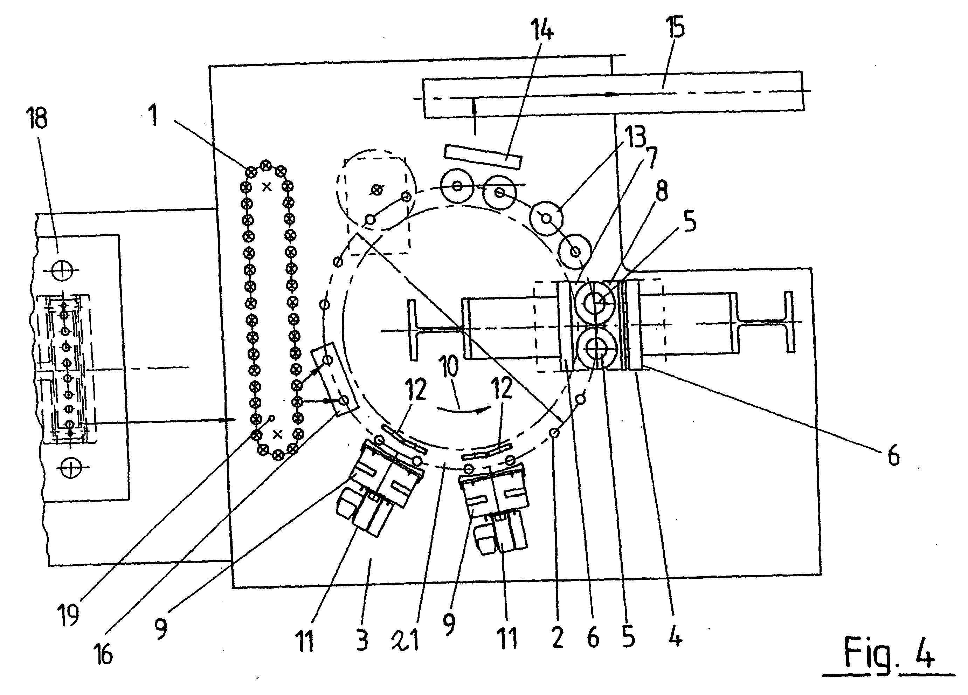

Bei der in Fig. 4 dargestellten Ausführungsform einer Vorrichtung zur Durchführung des einstufigen Verfahrens zur Behälterherstellung weist die Vorrichtung zur Blasformung von Behältern ein Transportrad 21 auf, das ringartig konstruiert ist. Das Transportrad 21 ist rotationsfähig angeordnet und weist entlang seines Umfanges Halteeinrichtungen 2 für Formlinge auf. Entlang des Transportrades 21 sind eine Heizeinrichtung 3 sowie eine Blasstation 4 angeordnet. Bei der dargestellten Darstellungsform weist die Blasstation 4 zwei Kavitäten 5 auf, insbesondere ist jedoch an die Verwendung von drei oder mehr Kavitäten gedacht. Gemäß einer typischen Dimensionierung sind vier Kavitäten vorgesehen.

Die Blasstation 4 besteht aus Formträgern 6, die Blasformhälften 7,8 haltern. Die Formträger 6 sind relativ zueinander positionierbar, um ein Öffnen und Schließen der Blasstation zu ermöglichen.

Die Heizeinrichtung 3 besteht aus Heizkästen 9, die in einer Transportrichtung 10 hintereinander angeordnet sind. Die Heizkästen 9 können offen oder tunnelartig konstruiert sein. Gemäß einer typischen Ausführungsform weisen die Heizkästen 9 InfrarotStrahler sowie Kühlgebläse 11 auf. Den Heizkästen 9 gegenüberliegend können Reflektoren 12 angeordnet werden.

Die fertiggeblasenen Behälter 13 werden im Bereich einer Entnahme 14 vom Transportrad 21 zu einer Ausgabeeinrichtung 15 übergeben. Im Bereich einer Eingabe 16 werden die Vorformlinge 1 dem Transportrad 21 zugeführt.

Bei einer Kombination der Blaseinrichtung mit einer Spritzeinrichtung 18 zu einer Gesamtvorrichtung gemäß dem Einstufenverfahren ist es insbesondere vorteilhaft, einen Zwischenspeicher 19 für die Vorformlinge 1 zu verwenden. Der Zwischenspeicher 19 führt zum einen eine Koordinierung von unterschiedlichen Taktzeiten der Spritzeinrichtung 18 sowie der Blaseinrichtung durch, darüber hinaus kann eine Temperaturkonditionierung der Vorformlinge 1 durchgeführt werden. Hinsichtlich der Handhabung der Vorformlinge 1 sowie der Behälter 13 ist insbesondere an einen taktweisen Betrieb der beschriebenen Vorrichtungskomponenten gedacht.

## Patentansprüche

1. Verfahren zur Steuerung einer Behälterformung bei der Herstellung von Behältern (13) aus einem thermoplastischen Material, bei dem eine einstufige Herstellung der Behälter (13) derart durchgeführt wird, daß mindestens zwei im Bereich eines Spritzgußmoduls spritzgegossene Vorformlinge (1) auf einem Temperaturniveau oberhalb einer Umgebungstemperatur vom Spritzgußmodul zeitlich nacheinander mindestens einer Blasstation zur Blasverformung der Vorformlinge (1) in Behälter (13) zugeführt und vor der Blasverformung geeignet temperiert werden, **dadurch gekennzeichnet, daß** zur Kompensation eines relativ zueinander ungleichmäßigen Wärmeinhaltes im Material der zeitlich aufeinander folgend umzuformenden Vorformlinge (1) mindestens ein Blasparameter bei der Umformung der Vorformlinge (1) zu den Behältern (13) bei zeitlich aufeinander folgenden Blasverformungen relativ zueinander derart unterschiedlich vorgegeben wird, daß eine Kompensation des ungleichmäßigen Wärmeinhaltes derart erfolgt, daß nach einer Beendigung des Blasvorganges Behälter (13) mit näherungsweise identischer räumlicher Verteilung von Wandmaterial, Orientierungsverlauf und Kristallisationscharakteristik vorliegen.

2. Verfahren nach Anspruch 1, **dadurch gekennzeichnet, daß** bei der Blasverformung zeitlich nacheinander zuerst eine Vorblasphase und anschließend eine Hauptblasphase durchgeführt wird, wobei während der Hauptblasphase ein höherer Blasdruck als während der Vorblasphase erreicht wird und daß als Blasparameter der Druckverlauf verändert wird.

3. Vorrichtung nach Anspruch 1 oder 2, **dadurch gekennzeichnet, daß** als Blasparameter die Zeitdauer der Vorblasphase verändert wird.

4. Verfahren nach einem der Ansprüche 1 bis 3, **dadurch gekennzeichnet, daß** als Blasparameter die Zeitdauer der Hauptblasphase verändert wird.

5. Verfahren nach einem der Ansprüche 1 bis 4, **dadurch gekennzeichnet, daß** als Blasparameter der Umschaltzeitpunkt zwischen der Vorblasphase und der Hauptblasphase verändert wird.

6. Verfahren nach einem der Ansprüche 1 bis 5, **dadurch gekennzeichnet, daß** als Blasparameter die Reckgeschwindigkeit verändert wird.

7. Verfahren nach einem der Ansprüche 1 bis 6, **dadurch gekennzeichnet, daß** als Blasparameter der Zeitpunkt des Beginns des Reckvorganges verändert wird.

8. Verfahren nach einem der Ansprüche 1 bis 7, **dadurch gekennzeichnet, daß** eine unterschiedliche thermische Behandlung der aufeinander folgenden Vorformlinge derart durchgeführt wird, daß trotz des Ablaufes einer relativ zueinander unterschiedlichen Wartezeit der Vorformlinge bis zur Blasverformung beziehungsweise bis zu einem Aufheizen vor der Blasverformung eine näherungsweise gleiche Temperaturverteilung in den Vorformlingen vorliegt.

9. Verfahren nach einem der Ansprüche 1 bis 7, **dadurch gekennzeichnet, daß** zunächst eine im wesentlichen gleiche thermische Behandlung der aufeinander folgenden Vorformlinge durchgeführt wird und daß sich an diese gleiche thermische Behandlung eine weitere thermische Behandlung anschließt, die relativ zueinander unterschiedliche Wartezeiten auf den Beginn der anschließenden Blasverformung näherungsweise kompensiert.

10. verfahren nach einem der Ansprüche 1 bis 9, **dadurch gekennzeichnet, daß** zunächst N Vorformlinge gleichzeitig spritzgußtechnisch hergestellt, anschließend X x M Vorformlinge gleichzeitig zu Behältern umgeformt werden, wobei X x M = N gilt.

11. Verfahren nach einem der Ansprüche 1 bis 10, **dadurch gekennzeichnet, daß** eine Steuerung der Veränderung des mindestens einen Blasparameters in Abhängigkeit von einer Erfassung mindestens einer Eigenschaft der Vorformlinge durchgeführt wird.

12. Vorrichtung zur Blasformung von Behältern (13) aus einem thermoplastischen Material, die ein Spritzgußmodul zur Herstellung von Vorformlingen (1), eine Temperiereinrichtung für die spritzgegossenen Vorformlinge (1), mindestens eine Reckeinrichtung für die Vorformlinge (1) sowie mindestens eine Blastation zur Umformung der Vorformlinge (1) in die Behälter (13) aufweist, **dadurch gekennzeichnet, daß** eine Parameter-Steuerung vorgesehen ist, die mindestens einen den Umformungsvorgang beeinflussenden Parameter für mindestens zwei zeitlich nacheinander verarbeitete Vorformlinge (1) voneinander abweichend vorgibt.

13. Vorrichtung nach Anspruch 12, **dadurch gekennzeichnet, daß** die Parametersteuerung als Steuerung für einen Blasdruckverlauf ausgebildet ist.

14. Vorrichtung nach Anspruch 13 oder 13, **dadurch gekennzeichnet, daß** die Parametersteuerung als Steuerung für den Reckvorgang ausgebildet ist.

15. Vorrichtung nach einem der Ansprüche 12 bis 14, **dadurch gekennzeichnet, daß** die Parametersteuerung als Steuerung zur Vorgabe eines Temperaturprofils der Vorformlinge ausgebildet ist.

## Claims

1. Method of controlling a moulding of containers during the production of containers (13) from a thermoplastic material, in which a single-stage production of the containers (13) is carried out in such a way that at least two preforms (1) injection-moulded in the region of an injection-moulding module are fed at successive times and at a temperature level above an ambient temperature of the injection-moulding module to at least one blow-moulding station for the blow-moulding of the preforms (1) into containers (13) and are adjusted to a suitable temperature before the blow-moulding, **characterized in that**, to compensate for a heat content in the material of the preforms (1) to be moulded in succession that is uneven in relation to one another, at least one blow-moulding parameter for the moulding of the preforms (1) into the containers (13) during successive blow-moulding operations is prescribed differently in relation to one other in such a way that compensation for the uneven heat content takes place in such a way that, after the blow-moulding operation is ended, containers (13) with approximately identical spatial distribution of the wall material, orientation profile and crystallization characteristics are obtained.

2. Method according to Claim 1, **characterized in that**, during the blow-moulding, firstly a pre-blowing phase and subsequently a main blowing phase are carried out at successive times, a higher blowing pressure being reached during the main blowing phase than during the pre-blowing phase, and **in that** the pressure profile is changed as the blow-moulding parameter.

3. Method according to Claim 1 or 2, **characterized in that** the time duration of the pre-blowing phase is changed as the blow-moulding parameter.

4. Method according to one of Claims 1 to 3, **characterized in that** the time duration of the main blowing phase is changed as the blow-moulding parameter.

5. Method according to one of Claims 1 to 4, **characterized in that** the changeover time between the pre-blowing phase and the main blowing phase is changed as the blow-moulding parameter.

6. Method according to one of Claims 1 to 5, **characterized in that** the stretching rate is changed as the blow-moulding parameter.

7. Method according to one of Claims 1 to 6, **characterized in that** the time of the beginning of the stretching operation is changed as the blow-moulding parameter.

8. Method according to one of Claims 1 to 7, **characterized in that** a different thermal treatment of the successive preforms is carried out in such a way that, in spite of the preforms waiting for different times in relation to one another before the blow-moulding or before being heated up prior to the blow-moulding, an approximately identical temperature distribution in the preforms is obtained.

9. Method according to one of Claims 1 to 7, **characterized in that** initially a substantially identical thermal treatment of the successive preforms is carried out, and **in that** this identical thermal treatment is followed by a further thermal treatment, which approximately compensates for the different waiting times in relation to one other before the beginning of the subsequent blow-moulding.

10. Method according to one of Claims 1 to 9, **characterized in that** initially N preforms are simultaneously produced by injection-moulding, and subsequently X x M preforms are simultaneously moulded into containers, with X x M = N.

11. Method according to one of Claims 1 to 10, **characterized in that** controlling the changing of the at least one blow-moulding parameter is carried out in dependence on sensing at least one property of the preforms.

12. Apparatus for the blow-moulding of containers (13) from a thermoplastic material, which has an injection-moulding module for producing preforms (1), a temperature-controlling device for the injection-moulded preforms (1), at least one stretching device for the preforms (1) and also at least one blow-moulding station for the moulding of the preforms (1) into the containers (13), **characterized in that** a parameter control is provided, which prescribes at least one parameter influencing the moulding operation differently from one another for at least two preforms (1) processed at successive times.

13. Apparatus according to Claim 12, **characterized in that** the parameter control is designed as a control for a blowing pressure profile.

14. Apparatus according to Claim 12 or 13, **characterized in that** the parameter control is designed as a control for the stretching operation.

15. Apparatus according to one of Claims 12 to 14, **characterized in that** the parameter control is designed as a control for prescribing a temperature profile of the preforms.

## Revendications

1. Procédé pour le réglage d'un moulage de récipients dans la préparation de récipients (13) en un matériau thermoplastique, dans lequel une préparation en une étape du récipient (13) est réalisée, dans lequel au moins deux préformés (1) moulés par injection dans la zone d'un module de moulage par injection, sont amenés à un niveau de température supérieur à la température ambiante du module de moulage par injection, l'un après l'autre, à une station de soufflage pour le moulage par soufflage des préformés (1) en récipient (13) et avant le moulage par soufflage, sont tempérés de manière appropriée, **caractérisé en ce que** pour compenser une capacité calorifique relativement irrégulière dans le matériau du préformé (1) à mouler temporellement successivement, au moins un paramètre de soufflage est prédéfini différemment lors du moulage des préformés (1) en récipients (13) lors du moulage par soufflage temporellement successif, de sorte qu'une compensation de la capacité calorifique irrégulière se produit pour que, après achèvement du moulage par soufflage, le récipient (13) présente une répartition spatiale presque identique du matériau de paroi, de l'allure de l'orientation et des caractéristiques de cristallisation.

2. Procédé suivant la revendication 1, **caractérisé en ce que** lors du moulage par soufflage, on réalise successivement, d'abord une phase de présoufflage et ensuite, une phase de soufflage principal, où pendant la phase de soufflage principal, on atteint une pression de soufflage plus élevée que pendant la phase de présoufflage et **en ce que** comme paramètre de soufflage, on modifie l'allure de la pression.

3. Dispositif suivant la revendication 1 ou 2, **caractérisé en ce que** comme paramètre de soufflage, on modifie la durée de la phase de présoufflage.

4. Procédé suivant l'une quelconque des revendications 1 à 3, **caractérisé en ce que** comme paramètre de soufflage, on modifie la durée de la phase de soufflage principal.

5. Procédé suivant l'une quelconque des revendications 1 à 4, **caractérisé en ce que** comme paramètre de soufflage, on modifie le point de transfert entre la phase de présoufflage et la phase de soufflage principal.

6. Procédé suivant l'une quelconque des revendications 1 à 5, **caractérisé en ce que** comme paramètre de soufflage, on modifie la vitesse d'étirage.

7. Procédé suivant l'une quelconque des revendications 1 à 6, **caractérisé en ce que** comme paramètre de soufflage, on modifie le moment du commencement du processus d'étirage.

8. Procédé suivant l'une quelconque des revendications 1 à 7, **caractérisé en ce qu'**un traitement thermique différent des préformés successifs est réalisé **en ce que** malgré l'écoulement d'un temps d'attente-relativement différent des préformés jusqu'au moulage par soufflage et respectivement, jusqu'à un chauffage avant le moulage par soufflage, une distribution presque similaire de la température est présente dans les préformés.

9. Procédé suivant l'une quelconque des revendications 1 à 7, **caractérisé en ce que** l'on réalise d'abord un traitement thermique essentiellement similaire des préformés successifs et que succède à ce traitement thermique similaire, un autre traitement thermique qui compense approximativement les temps d'attente relativement différents les uns des autres, au commencement du moulage par soufflage suivant.

10. Procédé suivant l'une quelconque des revendications 1 à 9, **caractérisé en ce que** l'on prépare d'abord N préformés par moulage par injection simultanément, ensuite on moule X x M préformés en récipients simultanément, où X x M = N.

11. Procédé suivant l'une quelconque des revendications 1 à 10, **caractérisé en ce qu'**un réglage de la modification d'au moins un paramètre de soufflage est réalisé en fonction d'une détection d'une propriété du préformé.

12. Dispositif de moulage de récipients (13) en un matériau thermoplastique, qui présente un module de moulage par injection pour la préparation des préformés (1), un dispositif d'équilibrage de la température des préformés (1) moulés par injection, au moins un dispositif d'étirage des préformés (1), ainsi qu'au moins une station de soufflage pour le moulage des préformés (1) en récipients (13), **caractérisé en ce que** l'on prévoit un paramètre de réglage, qui prédéfinit de manière variable au moins un paramètre influençant le processus de moulage pour au moins 2 préformés (1) traités successivement.

13. Dispositif suivant la revendication 12, **caractérisé en ce que** le réglage de paramètre est formé comme le réglage d'une allure de pression de soufflage.

14. Dispositif suivant la revendication 12 ou 13, **caractérisé en ce que** le réglage de paramètre est formé comme le réglage du processus d'étirage.

15. Dispositif suivant l'une quelconque des revendications 12 à 14, **caractérisé en ce que** le réglage de paramètre est formé comme le réglage pour donner un profil de température aux préformés.
